# EUROPEAN PATENT APPLICATION

(11) **EP 4 727 028 A1**
(43) Date of publication of application: **15.04.2026**
(21) Application number: 24855401.6
(22) Date of filing: 04.06.2024
(51) Int. Cl.: H04B 7/0456

(54) **PRECODING METHOD AND APPARATUS FOR PHYSICAL UPLINK SHARED CHANNEL TRANSMISSION**

(30) Priority: 18.08.2023 CN 202311050609
(71) Applicant: Huawei Technologies Co., Ltd., Shenzhen, Guangdong 518129 (CN)
(72) Inventor: GAN, Linxiao, Shenzhen, Guangdong 518129 (CN); GONG, Mingxin, Shenzhen, Guangdong 518129 (CN); ZHANG, Xu, Shenzhen, Guangdong 518129 (CN); QU, Bingyu, Shenzhen, Guangdong 518129 (CN)
(74) Representative: Pfenning, Meinig & Partner mbB
(86) International application number: PCT/CN2024/097269
(87) International publication number: WO 2025/039671

(57) **Abstract**

Embodiments of this application disclose a precoding method and an apparatus for physical uplink shared channel transmission. The method includes: receiving a modulation and coding scheme MCS of a physical uplink shared channel PUSCH; and determining a precoding frequency domain granularity of the PUSCH based on the MCS. The method can increase a signal to interference plus noise ratio of a PUSCH received by a network device, thereby increasing a transmission rate.

## Description

This application claims priority to Chinese Patent Application No. 202311050609.5, filed with the China National Intellectual Property Administration on August 18, 2023 and entitled "PRECODING METHOD AND APPARATUS FOR PHYSICAL UPLINK SHARED CHANNEL TRANSMISSION", which is incorporated herein by reference in its entirety.

### TECHNICAL FIELD

Embodiments of this application relate to the field of communication technologies, and in particular, to a precoding method and an apparatus for physical uplink shared channel transmission.

### BACKGROUND

In a MIMO technology, a transmit end (for example, user equipment UE) may precode to-be-sent data, to cope with interference during transmission, and improve transmission reliability.

For example, in an NR system, during downlink transmission, a base station may notify the UE of a frequency domain granularity of precoding (which may also be referred to as a precoding frequency domain granularity) of a downlink data channel by using higher layer signaling, a dynamic indication, or an implicit indication based on a scheduled bandwidth. The precoding frequency domain granularity may be 2 resource blocks (resource block, RB), 4 RBs, or wideband. If the precoding frequency domain granularity is wideband, in downlink transmission, the base station applies a same precoding matrix to the scheduled bandwidth. If the precoding frequency domain granularity is 2 RBs or 4 RBs, during precoding in downlink transmission, the base station divides the scheduled bandwidth into different subbands at the precoding frequency domain granularity, and applies different precoding matrices to different subbands.

Currently, in some communication systems (for example, an NR system and an LTE system), during uplink transmission, the precoding frequency domain granularity can only be wideband.

### SUMMARY

Embodiments of this application disclose a precoding method and an apparatus for physical uplink shared channel transmission, to increase a signal to interference plus noise ratio of a PUSCH received by a network device, thereby increasing a transmission rate.

According to a first aspect, this application discloses a precoding method for physical uplink shared channel transmission. The method may include:
receiving a modulation and coding scheme MCS of a physical uplink shared channel PUSCH; and
determining a precoding frequency domain granularity of the PUSCH based on the MCS.

In embodiments of this application, a terminal device may determine the precoding frequency domain granularity of the PUSCH based on the MCS. The method can increase a signal to interference plus noise ratio of a PUSCH received by a network device, thereby increasing a transmission rate.

With reference to the first aspect, in a possible implementation, the determining the precoding frequency domain granularity of the PUSCH based on the MCS includes:
when the MCS is less than a first MCS threshold, determining that the precoding frequency domain granularity is a scheduled bandwidth of the PUSCH, where the scheduled bandwidth is a frequency domain resource assigned by the network device to the terminal device; or
when the MCS is not less than the first MCS threshold, determining that the precoding frequency domain granularity is less than the scheduled bandwidth.

In embodiments of this application, considering that a signal-to-noise ratio (Signal-to-Noise Ratio, SNR) of a communication link is low when a low-order MCS is used, channel estimation performance is a bottleneck, and a gain brought by subband precoding is insufficient to offset a loss of narrowband channel estimation, in embodiments of this application, when the low-order MCS is used, it is determined that the precoding frequency domain granularity is the scheduled bandwidth of the PUSCH. In this case, channel estimation accuracy can be improved through wideband channel estimation, to increase the signal to interference plus noise ratio of the PUSCH received by the network device.

The subband precoding means that a bandwidth is divided into different subbands, and different precoding matrices are applied to the different subbands.

In embodiments of this application, considering that the SNR of the communication link is high when a high-order MCS is used, and the channel estimation performance is no longer a bottleneck, in embodiments of this application, it is determined that the precoding frequency domain granularity is less than the scheduled bandwidth. In this case, a signal to interference plus noise ratio of a received signal is increased through the subband precoding, so that the transmission rate is increased.

In a possible implementation, whether the MCS is a high-order MCS or a low-order MCS may be determined based on an MCS threshold (for example, the first MCS threshold). For example, an MCS less than the first MCS threshold is considered as a low-order MCS, and in this case, it is determined that the precoding frequency domain granularity is the scheduled bandwidth of the PUSCH; and an MCS not less than the first MCS threshold is determined as a high-order MCS, and in this case, it is determined that the precoding frequency domain granularity is less than the scheduled bandwidth.

With reference to the first aspect, in a possible implementation, M intervals are obtained by dividing N second MCS thresholds, where N is an integer greater than 1, and M is not greater than N; each of the M intervals corresponds to one preset granularity; the M intervals include a first interval; and the determining the precoding frequency domain granularity of the PUSCH based on the MCS includes:
when the MCS belongs to the first interval, determining a preset granularity corresponding to the first interval as the precoding frequency domain granularity.

In a possible implementation, the M intervals are obtained by dividing a sequence formed by arranging the N second MCS thresholds in ascending order, an interval arranged earlier corresponds to a larger preset granularity, and an interval arranged later corresponds to a smaller preset granularity. In the method, a small preset granularity may be used when a high order is used, to increase the signal to interference plus noise ratio of the PUSCH received by the network device, so that the transmission rate is increased.

With reference to the first aspect, in a possible implementation, the determining the precoding frequency domain granularity of the PUSCH based on the MCS includes:
determining the precoding frequency domain granularity of the PUSCH based on first indication information and the MCS, where the first indication information is frequency domain resource assignment.

With reference to the first aspect, in a possible implementation, the determining the precoding frequency domain granularity of the PUSCH based on the first indication information and the MCS includes:
when the MCS is less than a third MCS threshold and resource blocks of the PUSCH are contiguous in frequency domain, determining that the precoding frequency domain granularity is the scheduled bandwidth.

In embodiments of this application, when the MCS is less than the third MCS threshold (that is, the low-order MCS), it is determined that the precoding frequency domain granularity is the scheduled bandwidth of the PUSCH. In this case, the signal to interference plus noise ratio of the PUSCH received by the network device can be increased through the wideband channel estimation.

With reference to the first aspect, in a possible implementation, the determining the precoding frequency domain granularity of the PUSCH based on the first indication information and the MCS includes:
when the MCS is less than the third MCS threshold and the resource blocks of the PUSCH are non-contiguous in frequency domain, determining that the precoding frequency domain granularity is less than the scheduled bandwidth.

With reference to the first aspect, in a possible implementation, the method further includes:
when the MCS is less than the third MCS threshold and the resource blocks of the PUSCH are non-contiguous in frequency domain, using a same precoding matrix for resource blocks in the scheduled bandwidth that belong to a same frequency domain interval, where the frequency domain interval includes several contiguous resource blocks.

In embodiments of this application, when the MCS is less than the third MCS threshold (that is, the low-order MCS), using a same precoding matrix for resource blocks in the scheduled bandwidth that belong to a same frequency domain interval, to increase a bandwidth for channel estimation as much as possible. Channel estimation accuracy can be improved through the wideband channel estimation, to increase the signal to interference plus noise ratio of the PUSCH received by the network device.

With reference to the first aspect, in a possible implementation, the method further includes:
when the MCS is less than the third MCS threshold and the resource blocks of the PUSCH are non-contiguous in frequency domain, using a same precoding matrix for contiguous resource blocks in the scheduled bandwidth.

In embodiments of this application, when the MCS is less than the third MCS threshold (that is, the low-order MCS), using the same precoding matrix for the contiguous resource blocks in the scheduled bandwidth, to increase the bandwidth for the channel estimation as much as possible. Channel estimation accuracy can be improved through the wideband channel estimation, to increase the signal to interference plus noise ratio of the PUSCH received by the network device.

With reference to the first aspect, in a possible implementation, the method further includes:
when the MCS is less than the third MCS threshold and the resource blocks of the PUSCH are non-contiguous in frequency domain, using a same precoding matrix for resource blocks meeting a first condition, where the resource blocks meeting the first condition include at least one first resource block and at least one second resource block, and a quantity of unscheduled resource blocks between the at least one first resource block and the at least one second resource block is less than a first frequency domain resource threshold.

In embodiments of this application, when the MCS is less than the third MCS threshold (that is, the low-order MCS), using the same precoding matrix for the resource blocks meeting the first condition, to increase the bandwidth for the channel estimation as much as possible. Channel estimation accuracy can be improved through the wideband channel estimation, to increase the signal to interference plus noise ratio of the PUSCH received by the network device.

With reference to the first aspect, in a possible implementation, the method further includes:
when the MCS is less than the third MCS threshold and the resource blocks of the PUSCH are non-contiguous in frequency domain, using different precoding matrices for resource blocks meeting a second condition, where the resource blocks meeting the second condition include at least one third resource block and at least one fourth resource block, and a quantity of unscheduled resource blocks between the at least one third resource block and the at least one fourth resource block is not less than the first frequency domain resource threshold.

With reference to the first aspect, in a possible implementation, the determining the precoding frequency domain granularity of the PUSCH based on the first indication information and the MCS includes:
when the MCS is not less than the third MCS threshold, determining that the precoding frequency domain granularity is less than the scheduled bandwidth.

With reference to the first aspect, in a possible implementation, the method further includes:
when the MCS is not less than the third MCS threshold, using a same precoding matrix for resource blocks in the scheduled bandwidth that belong to a same frequency domain interval; and using different precoding matrices for resource blocks in the scheduled bandwidth that do not belong to a same frequency domain interval, where the frequency domain interval includes several contiguous resource blocks.

In embodiments of this application, when the MCS is not less than the third MCS threshold (that is, the high-order MCS), using the different precoding matrices for the resource blocks that do not belong to the same frequency domain interval and that are in the scheduled bandwidth, to reduce the bandwidth for the channel estimation as much as possible, and the signal to interference plus noise ratio of the PUSCH received by the network device is increased through the gain brought by the subband precoding.

According to a second aspect, an embodiment of this application provides a precoding method for physical uplink shared channel transmission, applied to a network device. The method includes:
sending a modulation and coding scheme MCS of a physical uplink shared channel PUSCH, where the MCS is used to determine a precoding frequency domain granularity of the PUSCH.

With reference to the second aspect, in a possible implementation, when the MCS is less than a first MCS threshold, the precoding frequency domain granularity is a scheduled bandwidth of the PUSCH, where the scheduled bandwidth is a frequency domain resource assigned by the network device to a terminal device, and the terminal device is a device that receives the MCS; or
when the MCS is not less than the first MCS threshold, the precoding frequency domain granularity is less than the scheduled bandwidth.

With reference to the second aspect, in a possible implementation, M intervals are obtained by dividing N second MCS thresholds, where N is an integer greater than 1, and M is not greater than N; each of the M intervals corresponds to one preset granularity; and
when the MCS belongs to a first interval, the precoding frequency domain granularity is a preset granularity corresponding to the first interval.

With reference to the second aspect, in a possible implementation, the method further includes:
sending first indication information, where the first indication information is used to determine the precoding frequency domain granularity of the PUSCH, and the first indication information is frequency domain resource assignment.

With reference to the second aspect, in a possible implementation, when the MCS is less than a third MCS threshold and resource blocks of the PUSCH are contiguous in frequency domain, the scheduled bandwidth is the precoding frequency domain granularity.

With reference to the second aspect, in a possible implementation, when the MCS is less than the third MCS threshold and the resource blocks of the PUSCH are non-contiguous in frequency domain, the precoding frequency domain granularity is less than the scheduled bandwidth.

With reference to the second aspect, in a possible implementation, when the MCS is less than the third MCS threshold and the resource blocks of the PUSCH are non-contiguous in frequency domain, resource blocks in the scheduled bandwidth that belong to a same frequency domain interval correspond to a same precoding matrix, where the frequency domain interval includes several contiguous resource blocks.

With reference to the second aspect, in a possible implementation, when the MCS is less than the third MCS threshold and the resource blocks of the PUSCH are non-contiguous in frequency domain, contiguous resource blocks in the scheduled bandwidth correspond to a same precoding matrix.

With reference to the second aspect, in a possible implementation, when the MCS is less than the third MCS threshold and the resource blocks of the PUSCH are non-contiguous in frequency domain, resource blocks meeting a first condition correspond to a same precoding matrix, where the resource blocks meeting the first condition include at least one first resource block and at least one second resource block, and a quantity of unscheduled resource blocks between the at least one first resource block and the at least one second resource block is less than a first frequency domain resource threshold.

With reference to the second aspect, in a possible implementation, when the MCS is less than the third MCS threshold and the resource blocks of the PUSCH are non-contiguous in frequency domain, resource blocks meeting a second condition correspond to different precoding matrices, where the resource blocks meeting the second condition include at least one third resource block and at least one fourth resource block, and a quantity of unscheduled resource blocks between the at least one third resource block and the at least one fourth resource block is not less than the first frequency domain resource threshold.

With reference to the second aspect, in a possible implementation, when the MCS is not less than the third MCS threshold, the precoding frequency domain granularity is less than the scheduled bandwidth.

With reference to the second aspect, in a possible implementation, when the MCS is not less than the third MCS threshold, the resource blocks that belong to the same frequency domain interval and that are in the scheduled bandwidth correspond to the same precoding matrix, and resource blocks in the scheduled bandwidth that do not belong to a same frequency domain interval correspond to different precoding matrices, where the frequency domain interval includes several contiguous resource blocks.

According to a third aspect, an embodiment of this application provides an apparatus for physical uplink shared channel transmission. The apparatus includes:
a receiving unit, configured to receive a modulation and coding scheme MCS of a physical uplink shared channel PUSCH; and
a determining unit, configured to determine a precoding frequency domain granularity of the PUSCH based on the MCS.

With reference to the third aspect, in a possible implementation, the determining unit is specifically configured to:
when the MCS is less than a first MCS threshold, determine that the precoding frequency domain granularity is a scheduled bandwidth of the PUSCH, where the scheduled bandwidth is a frequency domain resource assigned by a network device to a terminal device; or
when the MCS is not less than the first MCS threshold, determine that the precoding frequency domain granularity is less than the scheduled bandwidth.

With reference to the third aspect, in a possible implementation, M intervals are obtained by dividing N second MCS thresholds, where N is an integer greater than 1, and M is not greater than N; each of the M intervals corresponds to one preset granularity; the M intervals include a first interval; and the determining unit is specifically configured to:
when the MCS belongs to the first interval, determine a preset granularity corresponding to the first interval as the precoding frequency domain granularity.

With reference to the third aspect, in a possible implementation, the determining unit is specifically configured to:
determine the precoding frequency domain granularity of the PUSCH based on first indication information and the MCS, where the first indication information is frequency domain resource assignment.

With reference to the third aspect, in a possible implementation, the determining unit is specifically configured to:
when the MCS is less than a third MCS threshold and resource blocks of the PUSCH are contiguous in frequency domain, determine that the precoding frequency domain granularity is the scheduled bandwidth.

With reference to the third aspect, in a possible implementation, the determining unit is specifically configured to:
when the MCS is less than the third MCS threshold and the resource blocks of the PUSCH are non-contiguous in frequency domain, determine that the precoding frequency domain granularity is less than the scheduled bandwidth.

With reference to the third aspect, in a possible implementation, the apparatus further includes a precoding unit, and the precoding unit is configured to:
when the MCS is less than the third MCS threshold and the resource blocks of the PUSCH are non-contiguous in frequency domain, use a same precoding matrix for resource blocks in the scheduled bandwidth that belong to a same frequency domain interval, where the frequency domain interval includes several contiguous resource blocks.

With reference to the third aspect, in a possible implementation, the apparatus further includes the precoding unit, and the precoding unit is configured to:
when the MCS is less than the third MCS threshold and the resource blocks of the PUSCH are non-contiguous in frequency domain, use a same precoding matrix for contiguous resource blocks in the scheduled bandwidth.

With reference to the third aspect, in a possible implementation, the apparatus further includes the precoding unit, and the precoding unit is configured to:
when the MCS is less than the third MCS threshold and the resource blocks of the PUSCH are non-contiguous in frequency domain, use a same precoding matrix for resource blocks meeting a first condition, where the resource blocks meeting the first condition include at least one first resource block and at least one second resource block, and a quantity of unscheduled resource blocks between the at least one first resource block and the at least one second resource block is less than a first frequency domain resource threshold.

With reference to the third aspect, in a possible implementation, the apparatus further includes the precoding unit, and the precoding unit is configured to:
when the MCS is less than the third MCS threshold and the resource blocks of the PUSCH are non-contiguous in frequency domain, use different precoding matrices for resource blocks meeting a second condition, where the resource blocks meeting the second condition include at least one third resource block and at least one fourth resource block, and a quantity of unscheduled resource blocks between the at least one third resource block and the at least one fourth resource block is not less than the first frequency domain resource threshold.

With reference to the third aspect, in a possible implementation, the determining unit is specifically configured to:
when the MCS is not less than the third MCS threshold, determine that the precoding frequency domain granularity is less than the scheduled bandwidth.

With reference to the third aspect, in a possible implementation, the apparatus further includes the precoding unit, and the precoding unit is configured to:
when the MCS is not less than the third MCS threshold, use a same precoding matrix for resource blocks in the scheduled bandwidth that belong to a same frequency domain interval; and use different precoding matrices for resource blocks in the scheduled bandwidth that do not belong to a same frequency domain interval, where the frequency domain interval includes several contiguous resource blocks.

According to a fourth aspect, an embodiment of this application provides an apparatus for physical uplink shared channel transmission. The apparatus includes:
a sending unit, configured to send a modulation and coding scheme MCS of a physical uplink shared channel PUSCH, where the MCS is used to determine a precoding frequency domain granularity of the PUSCH.

With reference to the fourth aspect, in a possible implementation, when the MCS is less than a first MCS threshold, the precoding frequency domain granularity is a scheduled bandwidth of the PUSCH, where the scheduled bandwidth is a frequency domain resource assigned by a network device to a terminal device, and the terminal device is a device that receives the MCS; or
when the MCS is not less than the first MCS threshold, the precoding frequency domain granularity is less than the scheduled bandwidth.

With reference to the fourth aspect, in a possible implementation, M intervals are obtained by dividing N second MCS thresholds, where N is an integer greater than 1, and M is not greater than N; each of the M intervals corresponds to one preset granularity; and
when the MCS belongs to a first interval, the precoding frequency domain granularity is a preset granularity corresponding to the first interval.

With reference to the fourth aspect, in a possible implementation, the sending unit is further configured to:
send first indication information, where the first indication information is used to determine the precoding frequency domain granularity of the PUSCH, and the first indication information is frequency domain resource assignment.

With reference to the fourth aspect, in a possible implementation, when the MCS is less than a third MCS threshold and resource blocks of the PUSCH are contiguous in frequency domain, the scheduled bandwidth is the precoding frequency domain granularity.

With reference to the fourth aspect, in a possible implementation, when the MCS is less than the third MCS threshold and the resource blocks of the PUSCH are non-contiguous in frequency domain, the precoding frequency domain granularity is less than the scheduled bandwidth.

With reference to the fourth aspect, in a possible implementation, when the MCS is less than the third MCS threshold and the resource blocks of the PUSCH are non-contiguous in frequency domain, resource blocks in the scheduled bandwidth that belong to a same frequency domain interval correspond to a same precoding matrix, where the frequency domain interval includes several contiguous resource blocks.

With reference to the fourth aspect, in a possible implementation, when the MCS is less than the third MCS threshold and the resource blocks of the PUSCH are non-contiguous in frequency domain, contiguous resource blocks in the scheduled bandwidth correspond to a same precoding matrix.

With reference to the fourth aspect, in a possible implementation, when the MCS is less than the third MCS threshold and the resource blocks of the PUSCH are non-contiguous in frequency domain, resource blocks meeting a first condition correspond to a same precoding matrix, where the resource blocks meeting the first condition include at least one first resource block and at least one second resource block, and a quantity of unscheduled resource blocks between the at least one first resource block and the at least one second resource block is less than a first frequency domain resource threshold.

With reference to the fourth aspect, in a possible implementation, when the MCS is less than the third MCS threshold and the resource blocks of the PUSCH are non-contiguous in frequency domain, resource blocks meeting a second condition correspond to different precoding matrices, where the resource blocks meeting the second condition include at least one third resource block and at least one fourth resource block, and a quantity of unscheduled resource blocks between the at least one third resource block and the at least one fourth resource block is not less than the first frequency domain resource threshold.

With reference to the fourth aspect, in a possible implementation, when the MCS is not less than the third MCS threshold, the precoding frequency domain granularity is less than the scheduled bandwidth.

With reference to the fourth aspect, in a possible implementation, when the MCS is not less than the third MCS threshold, the resource blocks that belong to the same frequency domain interval and that are in the scheduled bandwidth correspond to the same precoding matrix, and resource blocks in the scheduled bandwidth that do not belong to a same frequency domain interval correspond to different precoding matrices, where the frequency domain interval includes several contiguous resource blocks.

According to a fifth aspect, this application discloses an apparatus for physical uplink shared channel transmission. The apparatus for physical uplink shared channel transmission may be the network device in the foregoing method embodiments, or may be a chip or a processor disposed in the network device. The apparatus for physical uplink shared channel transmission includes a processor. The processor is coupled to a memory. The memory is configured to store a program or instructions. When the program or the instructions are executed by the processor, the apparatus for physical uplink shared channel transmission is caused to perform the method performed by the network device, or the chip or the processor in the network device in the foregoing method embodiments.

According to a sixth aspect, this application discloses an apparatus for physical uplink shared channel transmission. The apparatus for physical uplink shared channel transmission may be the network device in the foregoing method embodiments, or may be a chip disposed in the network device. The apparatus for physical uplink shared channel transmission includes a processor and a memory. The memory is configured to store a program or instructions. When the program or the instructions are executed by the processor, the apparatus for physical uplink shared channel transmission is caused to perform the method performed by the network device, or the chip or a processor in the network device in the foregoing method embodiments.

According to a seventh aspect, this application discloses an apparatus for physical uplink shared channel transmission. The apparatus for physical uplink shared channel transmission may be the network device in the foregoing method embodiments, or may be a chip disposed in the network device. The apparatus for physical uplink shared channel transmission includes a communication interface and a processor, and optionally, further includes a memory. The memory is configured to store a computer program or instructions. The processor is coupled to the memory and the communication interface. When the processor executes the computer program or the instructions, the apparatus for physical uplink shared channel transmission is caused to perform the method performed by the network device or the chip in the network device in the foregoing method embodiments.

According to an eighth aspect, this application discloses a communication system. The communication system may include a network device that performs the precoding method for physical uplink shared channel transmission disclosed in the first aspect, a network device that performs the precoding method for physical uplink shared channel transmission disclosed in the second aspect, and a network device that performs the precoding method for physical uplink shared channel transmission disclosed in the third aspect.

According to a ninth aspect, this application discloses a computer-readable storage medium. The computer-readable storage medium stores a computer program or computer instructions. When the computer program or the computer instructions are run by a processor, the precoding method for physical uplink shared channel transmission disclosed in the foregoing aspects is implemented.

According to a tenth aspect, this application discloses a chip, including a processor, which is configured to execute a program stored in a memory. When the program is executed, the chip performs the foregoing method.

In a possible implementation, the memory is located outside the chip.

According to an eleventh aspect, this application discloses a computer program product. The computer program product includes computer program code, and when the computer program code is run by a processor, the foregoing precoding method for physical uplink shared channel transmission is performed.

Beneficial effects of the fifth aspect to the eleventh aspect are similar to beneficial effects of the corresponding method in the first aspect. For detailed descriptions, refer to the beneficial effects of the corresponding method.

### BRIEF DESCRIPTION OF DRAWINGS

FIG. 1 is a diagram of a network architecture of a communication system according to an embodiment of this application;
FIG. 2 is a schematic flowchart of a precoding method for physical uplink shared channel transmission according to an embodiment of this application;
FIG. 3 is a diagram of scheduled resource blocks according to an embodiment of this application;
FIG. 4 is another diagram of scheduled resource blocks according to an embodiment of this application;
FIG. 5 is still another diagram of scheduled resource blocks according to an embodiment of this application;
FIG. 6 is yet another diagram of scheduled resource blocks according to an embodiment of this application;
FIG. 7 is a schematic flowchart of another precoding method for physical uplink shared channel transmission according to an embodiment of this application;
FIG. 8 is a diagram of a structure of an apparatus for physical uplink shared channel transmission according to an embodiment of this application;
FIG. 9 is a diagram of a structure of another apparatus for physical uplink shared channel transmission according to an embodiment of this application;
FIG. 10 is a diagram of a structure of still another apparatus for physical uplink shared channel transmission according to an embodiment of this application; and
FIG. 11 is a diagram of a structure of yet another apparatus for physical uplink shared channel transmission according to an embodiment of this application.

### DESCRIPTION OF EMBODIMENTS

The following clearly describes embodiments of this application in detail with reference to the accompanying drawings in embodiments of this application.

Terms used in implementations of this application are merely used to explain specific embodiments of this application, but are not intended to limit this application.

The following first provides definitions of technical terms that may occur in embodiments of this application.

### (1) Precoding (precoding) technology

In the precoding technology, when channel state information is known, a sent signal is processed at a transmit end in advance, to facilitate signal detection by a receiver.

The precoding technology is usually used together with a multiple-input multiple-output (MIMO) technology. In short, in the MIMO, a plurality of transmit antennas are used in a base station. The MIMO technology provides spatial diversity and multiplexing, to improve data transmission reliability and channel gains. In a conventional single-antenna system, a signal is sent to a terminal in a broadcast manner, and signal energy is radiated to the surroundings. This leads to a waste of energy, and cannot ensure that a user receives a high-quality signal. However, in a MIMO system, the precoding technology may be used to process to-be-sent data at a modem in advance, so that data sent by the base station can be sent to users in a cell more directionally.

Typical advantages brought by precoding are as follows: 1. Signal processing is performed at the base station, so that user equipment can directly receive needed data, and signal processing at the terminal is avoided. 2. Precoding causes a signal sent by the base station to be more directional rather than simply radiate to the surroundings, so that power of the signal received by the user is increased, the waste of energy is avoided, and energy efficiency of a communication system is improved.

### (2) Frequency domain granularity of precoding

In embodiments of this application, the frequency domain granularity of precoding may be a precoding resource block group (Precoding Resource Block Group, PRG) size (PRG size).

Contiguous resource blocks (Resource block, RB) having a same precoding matrix are referred to as a precoding resource block group (Precoding Resource Block Group, PRG). The PRG size (PRG size) is determined by a physical resource block (physical resource block, PRB) bundling (physical resource block bundling, PRB bundling) procedure. The PRB bundling is to bundle a plurality of contiguous PRBs together for joint processing. A network device may use a same preprocessing manner (including beamforming and precoding) for the plurality of PRBs, and a terminal device may perform channel estimation jointly based on the plurality of PRBs.

When the terminal device performs joint channel estimation based on the plurality of PRBs, channel correlation between contiguous frequency domain resources may be used to improve accuracy of the channel estimation.

A supported PRG size is not limited in embodiments of this application. For example, the supported PRG size may be 2 resource blocks (resource block, RB), 4 RBs, or a full bandwidth (which may be referred to as wideband for short).

In an NR system, when downlink transmission is performed, a base station may notify UE of a frequency domain granularity of precoding of a downlink data channel by using higher layer signaling, a dynamic indication, or an implicit indication based on a scheduled bandwidth. The frequency domain granularity of precoding may be 2 RBs, 4 RBs, or wideband.

Specifically, in a first indication manner, if a higher layer parameter prb-BundlingType is configured as 'staticBundling', the precoding frequency domain granularity is equal to a value configured for a higher layer parameter 'bundleSize'.

In a second indication manner, if a higher layer parameter prb-BundlingType is configured as 'dynamicBundling', two precoding frequency domain granularity sets bundleSizeSet1 and bundleSizeSet2 are further configured by using the higher layer signaling. One or two values may be selected in {2, 4, wideband} and configured for bundleSizeSet1, and only one value can be selected in {2, 4, wideband} and configured for bundleSizeSet2. Further, when a PRB bundling size indicator in downlink control information (downlink control information, DCI) is 0, the UE considers that a value configured for bundleSizeSet2 is a precoding frequency domain granularity of a currently scheduled physical downlink shared channel (Physical Downlink Shared Channel, PDSCH). When the PRB bundling size indicator in the DCI is 1 and only one value is configured for bundleSizeSet1, the UE considers that the value configured for bundleSizeSet1 is the precoding frequency domain granularity of the currently scheduled PDSCH. When the PRB bundling size indicator in the DCI is 1 and two values are configured for bundleSizeSet1, the UE determines the precoding frequency domain granularity of the currently scheduled PDSCH based on the scheduled bandwidth.

In the foregoing technical solution, only indication manners of subband precoding are provided for the PDSCH, and no indication manner of subband precoding is provided for a physical uplink shared channel (Physical Uplink Shared Channel, PUSCH).

An inventor of this application finds that, a granularity of channel estimation performed by a receiver is also determined based on the frequency domain granularity of precoding. In a low-order modulation and coding scheme (Modulation and Coding Scheme, MCS), channel estimation performance becomes a bottleneck, and a gain brought by wideband channel estimation outweighs a gain of the subband precoding. In a high-order MCS, channel estimation performance is not a bottleneck, and a gain of the subband precoding outweighs a loss of narrowband channel estimation. In other words, because the precoding frequency domain granularity can only be wideband during uplink transmission in a current communication system, if the channel estimation performance is not a bottleneck, a signal to interference plus noise ratio of the PUSCH received by the network device during wideband precoding is lower than that during the subband precoding.

Based on the foregoing descriptions, to better understand a precoding method and a related apparatus for physical uplink shared channel transmission that are provided in this application, the following first describes a network architecture to which embodiments of this application are applied.

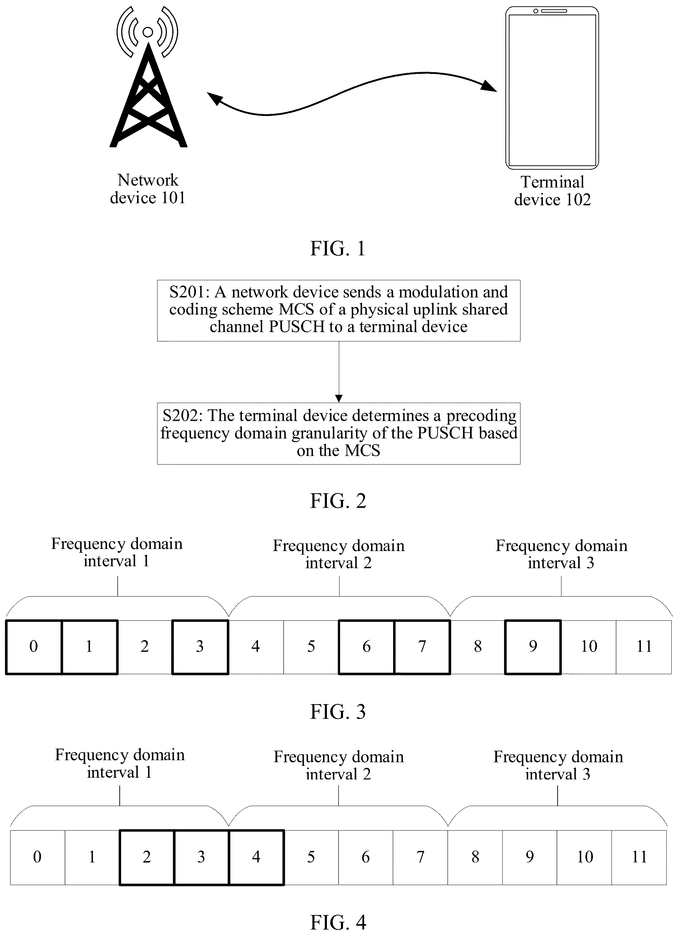

FIG. 1 is a diagram of a network architecture of a communication system according to an embodiment of this application.

As shown in FIG. 1, the network architecture may include a network device 101 and a terminal device 102.

The terminal device 102 may be connected to the network device 101 in a wireless manner, and may access a core network through the network device 101. The terminal device 102 may be at a fixed location, or may be mobile.

The network device 101 may be an entity configured to transmit or receive a signal, or may be a device configured to communicate with the terminal device 102. The network device may be a base station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application. The network device may be a device in a wireless network, for example, a radio access network (radio access network, RAN) node that connects the terminal device 102 to the wireless network. Currently, some examples of the RAN node are a base station, a next-generation base station gNB, a transmission reception point (transmission reception point, TRP), an evolved NodeB (evolved NodeB, eNB), a home base station, a baseband unit (baseband unit, BBU), and an access point (access point, AP) in a Wi-Fi system. In a network structure, the network device may include a central unit (central unit, CU) node, a distributed unit (distributed unit, DU) node, or a RAN device including the CU node and the DU node. In an O-RAN system, the CU may also be referred to as an O-CU, and the DU may also be referred to as an O-DU.

The terminal device 102 is an entity configured to receive or transmit a signal on a user side, and is mainly configured to implement a function of performing wireless communication with the network device 101.

For example, the terminal device 102 may be an access terminal, a subscriber unit, a subscriber station, a mobile station, a remote station, a remote terminal, a mobile device, a user terminal, a terminal, a wireless communication device, a user agent, or a user apparatus. Alternatively, the terminal device 102 may be a mobile phone (mobile phone), a cellular phone, a cordless phone, a session initiation protocol (session initiation protocol, SIP) phone, a tablet computer (Pad), a computer with a wireless receiving and sending function, a virtual reality (virtual reality, VR) terminal device, an augmented reality (augmented reality, AR) terminal device, a wireless terminal in industrial control (industrial control), a wireless local loop (wireless local loop, WLL) station, a personal digital assistant (personal digital assistant, PDA), a handheld device having a wireless communication function, a compute device or another processing device connected to a wireless modem, a vehicle-mounted device, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable device (for example, a smart watch, a smart band, and a pedometer), a terminal device in a 5G network, a terminal device in a future evolved public land mobile network (public land mobile network, PLMN), or the like. This is not limited in embodiments of this application. The terminal device 102 may be a device deployed on land, including an indoor device, an outdoor device, a handheld device, a wearable device, or a vehicle-mounted device; may be a device deployed on water (for example, on a ship); or may be a device deployed in air (for example, on an airplane, a balloon, and a satellite). In embodiments of this application, the terminal device 102 may be legacy UE, may be partial frequency monitoring UE at an RB level (RB-level partial frequency hopping, RPFS) that supports SRS coverage and capacity enhancement, or may be another UE. A type of the terminal device 102 is not limited in this application. The legacy UE is user equipment that supports an existing mechanism, for example, user equipment that supports release 15 and release 16.

In embodiments of this application, the terminal device 102 or the network device 101 includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). This operating system may be any one or more of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of a method provided in embodiments of this application is not particularly limited in embodiments of this application, provided that a program that records code of the method provided in embodiments of this application can be run to perform communication according to the method provided in embodiments of this application. For example, the execution entity of the method provided in embodiments of this application may be the terminal device 102 or the network device 101, or a functional module that can invoke and execute a program in the terminal device 102 or the network device 101.

It should be noted that a quantity and type of terminal devices 102 included in the network architecture shown in FIG. 1 are merely examples. Embodiments of this application are not limited thereto. For example, more or fewer terminal devices 102 that communicate with the network device 101 may alternatively be included. For brevity, details are not described in the accompanying drawings.

In addition, in the network architecture shown in FIG. 1, although the network device 101 and the terminal device 102 are shown, this application scenario may not be limited to including the network device 101 and the terminal device 102. For example, this application scenario may further include a core network device or a device configured to carry a virtualized network function. The core network device communicates with the terminal device 102 through the network device 101.

The technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system. This is not limited herein.

With reference to the foregoing network architecture, the following describes a precoding method for physical uplink shared channel transmission provided in an embodiment of this application.

FIG. 2 is a schematic flowchart of a precoding method for physical uplink shared channel transmission according to an embodiment of this application. In this embodiment, a function performed by a terminal device may alternatively be performed by a module (for example, a chip) in the terminal device. In this application, a function performed by a network device may alternatively be performed by a module (for example, a chip) in the network device.

As shown in FIG. 2, the precoding method for physical uplink shared channel transmission may include the following steps.

**Step S201: The network device sends a modulation and coding scheme MCS of a physical uplink shared channel PUSCH to the terminal device.**

Correspondingly, the terminal device receives the MCS from the network device.

The MCS is used to determine a precoding frequency domain granularity of the PUSCH.

In some other embodiments, the network device may further send first indication information to the terminal device, where the first indication information is used to determine the precoding frequency domain granularity of the PUSCH, and the first indication information is frequency domain resource assignment (Frequency domain resource assessment).

For example, the frequency domain resource assignment may be resource block assignment information (Resource block assignment information) or a resource indication value (Resource Indication Value).

**Step S202: The terminal device determines the precoding frequency domain granularity of the PUSCH based on the MCS.**

In embodiments of this application, the terminal device may determine the precoding frequency domain granularity of the PUSCH based on the MCS according to a predefined rule. The predefined rule may include at least the following: (1) determining the precoding frequency domain granularity of the PUSCH based on the MCS and a first MCS threshold; (2) determining the precoding frequency domain granularity of the PUSCH based on the MCS and N second MCS thresholds; and (3) determining the precoding frequency domain granularity of the PUSCH based on the first indication information and the MCS. Details are separately described below.

In some embodiments, the terminal device may determine the precoding frequency domain granularity of the PUSCH based on the received MCS and the first MCS threshold.

For example, when the MCS is less than the first MCS threshold, the terminal device may determine that the precoding frequency domain granularity is a scheduled bandwidth of the PUSCH, where the scheduled bandwidth is a frequency domain resource assigned by the network device to the terminal device; or when the MCS is not less than the first MCS threshold, the terminal device may determine that the precoding frequency domain granularity is less than the scheduled bandwidth.

In another possible case, when the MCS is not less than the first threshold, the PUSCH precoding frequency domain granularity obtained according to the predefined rule is greater than or equal to the scheduled bandwidth. In this case, the precoding frequency domain granularity is equal to the scheduled bandwidth.

The scheduled bandwidth is a frequency domain resource that can be scheduled when the terminal device communicates with the network device. The scheduled bandwidth may be a contiguous frequency domain bandwidth, or may be non-contiguous resource blocks.

In some other embodiments, the terminal device may determine the precoding frequency domain granularity of the PUSCH based on the received MCS and the N second MCS thresholds.

For example, M intervals are obtained by dividing the N second MCS thresholds, where N is an integer greater than 1, and M is not greater than N; each of the M intervals corresponds to one preset granularity; and the M intervals include a first interval. In this case, when the received MCS belongs to the first interval, the terminal device may determine a preset granularity corresponding to the first interval as the precoding frequency domain granularity.

The N second MCS thresholds may be N discrete natural numbers, and each of the M intervals may be one natural number or a plurality of contiguous natural numbers. For example, the first interval may be a plurality of contiguous natural numbers, and the MCS may be one of the plurality of contiguous natural numbers.

In still some other embodiments, the terminal device may determine the precoding frequency domain granularity of the PUSCH based on the first indication information and the MCS, where the first indication information is the frequency domain resource assignment.

The terminal device may determine, based on the first indication information, whether resource blocks of the PUSCH are contiguous in frequency domain.

In an implementation, the terminal device may determine the precoding frequency domain granularity of the PUSCH based on the first indication information, the MCS, and a third MCS threshold, where the first indication information is the frequency domain resource assignment.

In a first case, when the MCS is less than the third MCS threshold and the resource blocks of the PUSCH are contiguous in frequency domain, the terminal device may determine that the precoding frequency domain granularity is the scheduled bandwidth.

In a second case, when the MCS is less than the third MCS threshold and the resource blocks of the PUSCH are non-contiguous in frequency domain, the terminal device may determine that the precoding frequency domain granularity is less than the scheduled bandwidth. In this case:

In an implementation, the precoding frequency domain granularity is related to a frequency domain interval to which the resource block of the PUSCH belongs and/or whether the resource blocks of the PUSCH are contiguous.

Optionally, when the MCS is less than the third MCS threshold and the resource blocks of the PUSCH are non-contiguous in frequency domain, the terminal device may use a same precoding matrix for resource blocks in the scheduled bandwidth that belong to a same frequency domain interval, where the frequency domain interval includes several contiguous resource blocks.

Optionally, when the MCS is less than the third MCS threshold and the resource blocks of the PUSCH are non-contiguous in frequency domain, the terminal device may use a same precoding matrix for contiguous resource blocks in the scheduled bandwidth.

In another implementation, the precoding frequency domain granularity is related to locations of the resource blocks of the PUSCH in frequency domain.

Optionally, when the MCS is less than the third MCS threshold and the resource blocks of the PUSCH are non-contiguous in frequency domain, a same precoding matrix is used for resource blocks meeting a first condition, where the resource blocks meeting the first condition include at least one first resource block and at least one second resource block, and a quantity of unscheduled resource blocks between the at least one first resource block and the at least one second resource block is less than a first frequency domain resource threshold.

Optionally, when the MCS is less than the third MCS threshold and the resource blocks of the PUSCH are non-contiguous in frequency domain, different precoding matrices are used for resource blocks meeting a second condition, where the resource blocks meeting the second condition include at least one third resource block and at least one fourth resource block, and a quantity of unscheduled resource blocks between the at least one third resource block and the at least one fourth resource block is not less than the first frequency domain resource threshold.

In a third case, when the MCS is not less than the third MCS threshold, the terminal device may determine that the precoding frequency domain granularity is less than the scheduled bandwidth. In this case:

Optionally, when the MCS is not less than the third MCS threshold, the terminal device may use a same precoding matrix for resource blocks in the scheduled bandwidth that belong to a same frequency domain interval, and use different precoding matrices for resource blocks in the scheduled bandwidth that do not belong to a same frequency domain interval, where the frequency domain interval includes several contiguous resource blocks.

In some other embodiments of this application, the network device may alternatively determine the precoding frequency domain granularity of the PUSCH based on the MCS according to the predefined rule. For detailed content of the predefined rule and a detailed process in which the network device determines the precoding frequency domain granularity of the PUSCH, refer to content in step S202 and related content below. Details are not described herein again.

The following describes in detail the precoding method for physical uplink shared channel transmission provided in this embodiment of this application by using an example in which the terminal device is UE and the network device is a base station.

### Embodiment 1: The precoding frequency domain granularity of the PUSCH of the UE is related to the first MCS threshold and the MCS received by the UE.

In this embodiment, an MCS threshold (that is, the first MCS threshold) may be defined. When an MCS of the PUSCH scheduled by the base station is less than the MCS threshold, the UE may perform wideband precoding. In this case, the precoding frequency domain granularity is equal to the scheduled bandwidth. When the MCS of the PUSCH scheduled by the base station is greater than or equal to the MCS threshold, the UE may perform subband precoding. In this case, the frequency domain granularity of precoding is less than the scheduled bandwidth. A frequency domain granularity of the subband precoding may be notified by the base station to the UE by using higher layer signaling or DCI, or may be implicitly indicated based on a parameter like the scheduled bandwidth and/or the MCS.

### Embodiment 2: The precoding frequency domain granularity of the PUSCH of the UE is related to the N second MCS thresholds and the MCS received by the UE.

In this embodiment, *N (N ≥* 2) MCS thresholds (that is, the N second MCS thresholds) in ascending order may be defined, and *N* + 1 precoding frequency domain granularities are respectively scheduled bandwidths. The N MCS thresholds in ascending order may be respectively denoted as *X*₁, ... , and *X_{N}* in ascending order, the *N +* 1 precoding frequency domain granularities may be respectively denoted as scheduled bandwidth, *Y*₁ RBs, ..., *Y_{N}* RBs, and the scheduled bandwidth > *Y₁ > Y₂* > ··· *> Y_{N}.* When an MCS of a currently scheduled PUSCH < *X*₁, a frequency domain granularity at which the UE performs precoding may be the scheduled bandwidth. When the MCS of the currently scheduled PUSCH ∈ [*X*₁,*X₂*), the frequency domain granularity at which the UE performs precoding may be *Y*₁ RBs. When the MCS of the currently scheduled PUSCH ∈ [*X*_{*N*-1},*X_{N}*), the frequency domain granularity at which the UE performs precoding may be *Y*_{*N*-1} RBs. When the MCS of the currently scheduled PUSCH ≥ *X_{N},* the frequency domain granularity at which the UE performs precoding may be *Y_{N}* RBs.

### Embodiment 3: The precoding frequency domain granularity of the PUSCH of the UE is related to the third MCS threshold, the MCS received by the UE, and the first indication information.

In this embodiment, an MCS threshold (that is, the third MCS threshold) may be defined.

In a first case, when an MCS of the PUSCH scheduled by the base station is less than the MCS threshold, the UE may preferentially perform wideband precoding.

In this case, if a bandwidth that is scheduled (that is, the scheduled bandwidth) is contiguous in frequency domain, a frequency domain granularity at which the UE performs precoding may be the scheduled bandwidth. If the bandwidth that is scheduled is non-contiguous in frequency domain, in other words, the bandwidth that is scheduled includes several subbands in frequency domain, the frequency domain granularity at which the UE performs precoding may be less than the scheduled bandwidth. In this case, a BWP may be divided into a plurality of frequency domain intervals, and each frequency domain interval includes several RBs.

In some embodiments, if the scheduled bandwidth spans a plurality of frequency domain intervals, RBs in different subbands may be precoded based on frequency domain intervals in which the RBs are located.

In FIG. 3, three frequency domain intervals are used as an example for description. The three frequency domain intervals are respectively frequency domain interval 1, frequency domain interval 2, and frequency domain interval 3. Each frequency domain interval shows four RBs as an example. Frequency domain interval 1 includes RB 0 to RB 3, frequency domain interval 2 includes RB 4 to RB 7, and frequency domain interval 3 includes RB 8 to RB 11. In FIG. 3, a square with a bold edge represents a resource block in the scheduled bandwidth (which may be referred to as a scheduled resource block for short). FIG. 3 shows an example in which scheduled resource blocks are RB 0, RB 1, RB 3, RB 6, RB 7, and RB 9.

It can be learned from FIG. 3 that, scheduled resource blocks in frequency domain interval 1 are RB 0, RB 1, and RB 3, and therefore, a same precoding matrix (for example, precoding matrix 1) may be used for RB 0, RB 1, and RB 3. Scheduled resource blocks in frequency domain interval 2 are RB 6 and RB 7, and therefore, a same precoding matrix (for example, precoding matrix 2) may be used for RB 6 and RB 7. A scheduled resource block in frequency domain interval 3 is RB 9, and therefore, a same precoding matrix (for example, precoding matrix 3) may be used for RB 9. Precoding matrix 1, precoding matrix 2, and precoding matrix 3 may be different matrices.

It should be noted that, FIG. 3 shows an example in which each subband belongs to a same frequency domain interval. For example, in FIG. 3, both subband 1 (that is, RB 0 and RB 1) and subband 2 (that is, RB 3) belong to frequency domain interval 1, subband 3 (that is, RB 6 and RB 7) belongs to frequency domain interval 2, and subband 4 (that is, RB 9) belongs to frequency domain interval 3. In actual application, one subband may alternatively span a plurality of frequency domain intervals. Refer to related content shown in FIG. 4.

In some other embodiments, if a subband spans a plurality of (for example, two) frequency domain intervals, a same precoding matrix may be used for RBs in the subband.

In FIG. 4, three frequency domain intervals are used as an example for description. The three frequency domain intervals are respectively frequency domain interval 1, frequency domain interval 2, and frequency domain interval 3. Each frequency domain interval shows four RBs as an example. Frequency domain interval 1 includes RB 0 to RB 3, frequency domain interval 2 includes RB 4 to RB 7, and frequency domain interval 3 includes RB 8 to RB 11. In FIG. 4, a square with a bold edge represents a resource block in the scheduled bandwidth (which may be referred to as a scheduled resource block for short). FIG. 4 shows an example in which scheduled resource blocks are RB 2, RB 3, and RB 4.

It can be learned from FIG. 4 that, a subband including RB 2, RB 3, and RB 4 is a subband that spans two frequency domain intervals. In this case, a same precoding matrix may be used for RB 2, RB 3, and RB 4.

In a second case, when an MCS of the PUSCH scheduled by the base station is greater than or equal to the MCS threshold, the UE may preferentially perform subband precoding. In this case, a system bandwidth may be divided into different frequency domain intervals, a same precoding matrix is used for RBs in a same frequency domain interval, and different precoding matrices are used for RBs in different frequency domain intervals.

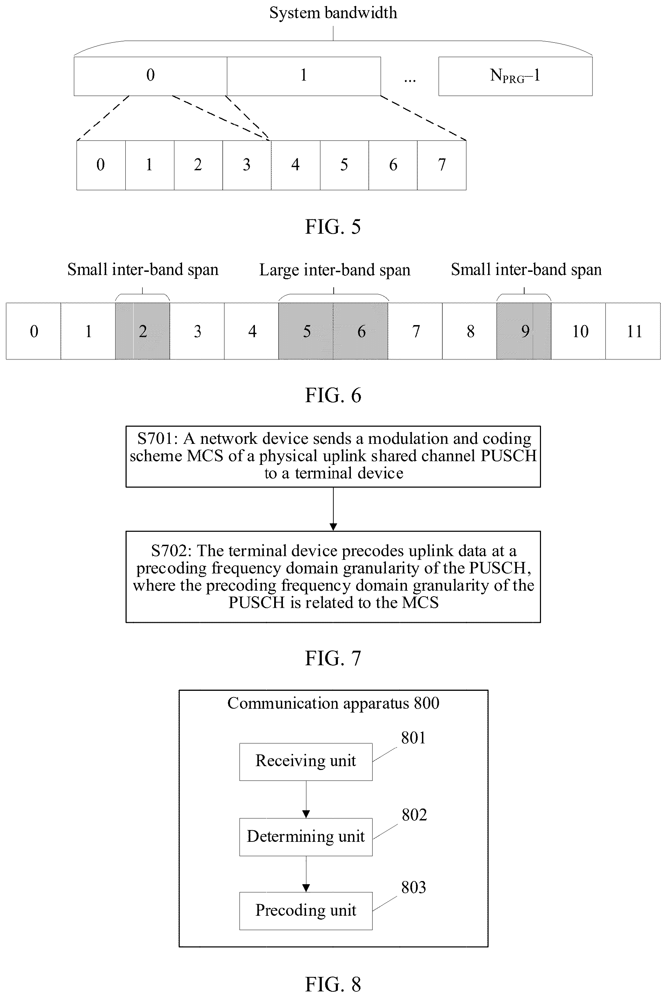

FIG. 5 shows an example in which the system bandwidth is divided into N_{PRG} frequency domain intervals, where N_{PRG} is an integer greater than 1. For example, the N_{PRG} frequency domain intervals may include frequency domain interval 0, frequency domain interval 1, and frequency domain interval (N_{PRG}-1). Each frequency domain interval shows four RBs, frequency domain interval 0 includes RB 0 to RB 3, and frequency domain interval 1 includes RB 4 to RB 7.

It can be learned from FIG. 5 that, RB 0 to RB 3 belong to a same frequency domain interval (that is, frequency domain interval 0), and therefore, a same precoding matrix (for example, precoding matrix 1) may be used for RB 0 to RB 3. RB 4 to RB 7 belong to a same frequency domain interval (that is, frequency domain interval 1), and therefore, a same precoding matrix (for example, precoding matrix 2) may be used for RB 4 to RB 7. Precoding matrix 1 and precoding matrix 2 may be different matrices.

### Embodiment 4: The precoding frequency domain granularity of the PUSCH of the UE is related to the third MCS threshold, the MCS received by the UE, and the first indication information.

In this embodiment, an MCS threshold (that is, the third MCS threshold) may be defined.

In a first case, when an MCS of the PUSCH scheduled by the base station is less than the MCS threshold, the UE may preferentially perform wideband precoding.

In this case, if a bandwidth that is scheduled (that is, the scheduled bandwidth) is contiguous in frequency domain, a frequency domain granularity at which the UE performs precoding may be the scheduled bandwidth. If the bandwidth that is scheduled is non-contiguous in frequency domain, in other words, the bandwidth that is scheduled includes several subbands in frequency domain, precoding matrices used for different subbands are related to a distance between adjacent subbands in frequency domain. For example, if a size (for example, a quantity of RBs) of an unscheduled frequency domain resource between subbands is less than the first frequency domain resource threshold, a frequency domain granularity of precoding on these subbands is a total bandwidth of the related subbands. If the size of the unscheduled frequency domain resource between the subbands is greater than or equal to the first frequency domain resource threshold, frequency domain granularities of precoding on these subbands are bandwidths of the corresponding subbands.

In FIG. 6, 12 RBs are used as an example for description, and the 12 RBs are respectively RB 0 to RB 11. In FIG. 6, a gray square represents an unscheduled resource block, and a white square represents a resource block in the scheduled bandwidth (which may be referred to as a scheduled resource block for short). FIG. 6 shows an example in which scheduled resource blocks are RB 0, RB 1, RB 3, RB 4, RB 7, RB 8, RB 10, and RB 11.

It can be learned from FIG. 6 that, RB 0 and RB 1 are a subband (Band 1 for short), RB 3 and RB 4 are a subband (Band 2 for short), RB 7 and RB 8 are a subband (Band 3 for short), and RB 10 and RB 11 are a subband (Band 4 for short).

Assuming that the first frequency domain resource threshold is two RBs, because a size of an unscheduled frequency domain resource between Band 1 and Band 2 is one RB, in other words, a quantity of unscheduled RBs is less than the first frequency domain resource threshold (an inter-band span is small), a same precoding matrix (for example, precoding matrix 1) may be used for RB 0, RB 1, RB 3, and RB 4.

Because a size of unscheduled frequency domain resources between Band 2 and Band 3 is two RBs, in other words, a quantity of unscheduled RBs is equal to the first frequency domain resource threshold (an inter-band span is large), different precoding matrices may be used for Band 2 and Band 3. For example, precoding matrix 1 is used for Band 2 (that is, RB 3 and RB 4), and precoding matrix 2 is used for Band 3 (that is, RB 7 and RB 8). Precoding matrix 1 and precoding matrix 2 may be different matrices.

Because a size of an unscheduled frequency domain resource between Band 3 and Band 4 is one RB, in other words, a quantity of unscheduled RBs is less than the first frequency domain resource threshold (an inter-band span is small), a same precoding matrix (for example, precoding matrix 2) may be used for RB 7, RB 8, RB 10, and RB 11.

In some embodiments, resource blocks for which a same precoding matrix is used may form an RBG. For example, RB 0, RB 1, RB 3, and RB 4 may form an RBG, and RB 7, RB 8, RB 10, and RB 11 may form an RBG.

In a second case, when an MCS of the PUSCH scheduled by the base station is greater than or equal to the MCS threshold, the UE may preferentially perform subband precoding. In this case, a system bandwidth is divided into different frequency domain intervals, a same precoding matrix is used for RBs in a same frequency domain interval, and different precoding matrices are used for RBs in different frequency domain intervals. For example, reference may be made to related descriptions in FIG. 5.

FIG. 7 is a schematic flowchart of another precoding method for physical uplink shared channel transmission according to an embodiment of this application. In this embodiment, a function performed by a terminal device may alternatively be performed by a module (for example, a chip) in the terminal device. In this application, a function performed by a network device may alternatively be performed by a module (for example, a chip) in the network device.

As shown in FIG. 7, the precoding method for physical uplink shared channel transmission may include the following steps.

**Step S701: The network device sends a modulation and coding scheme MCS of a physical uplink shared channel PUSCH to the terminal device.**

Correspondingly, the terminal device receives the MCS from the network device.

The MCS is used to determine a precoding frequency domain granularity of the PUSCH.

In some other embodiments, the network device may further send first indication information to the terminal device, where the first indication information is used to determine the precoding frequency domain granularity of the PUSCH, and the first indication information is frequency domain resource assignment (Frequency domain resource assessment).

For example, the frequency domain resource assignment may be resource block assignment information (Resource block assignment information) or a resource indication value (Resource Indication Value).

**Step S702: The terminal device precodes uplink data at the precoding frequency domain granularity of the PUSCH, where the precoding frequency domain granularity of the PUSCH is related to the MCS.**

In some embodiments, the precoding frequency domain granularity of the PUSCH is related to the MCS and a first MCS threshold. The first MCS threshold may be a natural number.

For example, when the MCS is less than the first MCS threshold, the precoding frequency domain granularity is a scheduled bandwidth of the PUSCH, where the scheduled bandwidth is a frequency domain resource assigned by the network device to the terminal device; or when the MCS is not less than the first MCS threshold, the precoding frequency domain granularity is less than the scheduled bandwidth.

In some other embodiments, the precoding frequency domain granularity of the PUSCH is related to the MCS and N second MCS thresholds. N is an integer greater than 1.

For example, M intervals are obtained by dividing the N second MCS thresholds, where N is an integer greater than 1, and M is not greater than N; and each of the M intervals corresponds to one preset granularity. When the MCS belongs to a first interval, the precoding frequency domain granularity is a preset granularity corresponding to the first interval.

In still some other embodiments, the precoding frequency domain granularity of the PUSCH is related to the MCS and the first indication information. N is an integer greater than 1, and the first indication information is the frequency domain resource assignment.

In yet some other embodiments, the precoding frequency domain granularity of the PUSCH is related to the MCS, the first indication information, and a third MCS threshold. N is an integer greater than 1, and the first indication information is the frequency domain resource assignment. The third MCS threshold may be a natural number.

In a first case, when the MCS is less than the third MCS threshold and resource blocks of the PUSCH are contiguous in frequency domain, the scheduled bandwidth is the precoding frequency domain granularity.

In a second case, when the MCS is less than the third MCS threshold and the resource blocks of the PUSCH are non-contiguous in frequency domain, the precoding frequency domain granularity is less than the scheduled bandwidth. In this case:

In an implementation, the precoding frequency domain granularity is related to a frequency domain interval to which the resource block of the PUSCH belongs and/or whether the resource blocks of the PUSCH are contiguous.

Optionally, when the MCS is less than the third MCS threshold and the resource blocks of the PUSCH are non-contiguous in frequency domain, resource blocks in the scheduled bandwidth that belong to a same frequency domain interval correspond to a same precoding matrix, where the frequency domain interval includes several contiguous resource blocks.

Optionally, when the MCS is less than the third MCS threshold and the resource blocks of the PUSCH are non-contiguous in frequency domain, contiguous resource blocks in the scheduled bandwidth correspond to a same precoding matrix.

In another implementation, the precoding frequency domain granularity is related to locations of the resource blocks of the PUSCH in frequency domain.

Optionally, when the MCS is less than the third MCS threshold and the resource blocks of the PUSCH are non-contiguous in frequency domain, resource blocks meeting a first condition correspond to a same precoding matrix, where the resource blocks meeting the first condition include at least one first resource block and at least one second resource block, and a quantity of unscheduled resource blocks between the at least one first resource block and the at least one second resource block is less than a first frequency domain resource threshold.

Optionally, when the MCS is less than the third MCS threshold and the resource blocks of the PUSCH are non-contiguous in frequency domain, resource blocks meeting a second condition correspond to different precoding matrices, where the resource blocks meeting the second condition includes at least one third resource block and at least one fourth resource block, and a quantity of unscheduled resource blocks between the at least one third resource block and the at least one fourth resource block is not less than the first frequency domain resource threshold.

In a third case, when the MCS is not less than the third MCS threshold, the precoding frequency domain granularity is less than the scheduled bandwidth. In this case:

Optionally, resource blocks in the scheduled bandwidth that belong to a same frequency domain interval may correspond to a same precoding matrix, and resource blocks in the scheduled bandwidth that do not belong to a same frequency domain interval correspond to different precoding matrices, where the frequency domain interval includes several contiguous resource blocks.

In some other embodiments of this application, the network device (for example, a base station) may determine the frequency domain granularity of precoding of the PUSCH based on a quantity of antenna ports of the network device.

In an implementation, the network device may perform subband precoding when the quantity of antenna ports is less than a preset quantity of ports, or perform wideband precoding when the quantity of antenna ports is not less than the preset quantity of ports. In the method, when the quantity of antenna ports is small, a signal to interference plus noise ratio of a signal received by a receiving side (that is, the network device) is high, and channel estimation performance is not a bottleneck. A gain brought by using the subband precoding outweighs a loss of narrowband channel estimation, to increase the signal to interference plus noise ratio of the PUSCH received by the network device. When the quantity of antenna ports is large, the signal to interference plus noise ratio of the signal received by the receiving side (that is, the network device) is low, and the channel estimation performance is a bottleneck. A gain obtained by using wideband channel estimation outweighs a loss of the subband precoding, to increase the signal to interference plus noise ratio of the PUSCH received by the network device.

In another implementation, quantities of antenna ports of the network device correspond to different precoding granularities. For example, for quantity X1 and quantity X2 of antenna ports (where X1<X2), when the quantity of antenna ports is less than or equal to X1, a precoding granularity is Y1 RBs; when the quantity of antenna ports is greater than X1 and less than or equal to X2, a precoding granularity is Y2 RBs; or when the quantity of antenna ports is greater than X2, a precoding granularity is the scheduled bandwidth (where Y1<Y2). In the method, when the quantity of antenna ports is small, a signal to interference plus noise ratio of a signal received by a receiving side (that is, the network device) is high, and channel estimation performance is not a bottleneck. A gain brought by using a smaller precoding granularity outweighs a loss of narrowband channel estimation, to increase the signal to interference plus noise ratio of the PUSCH received by the network device. When the quantity of antenna ports is large, the signal to interference plus noise ratio of the signal received by the receiving side (that is, the network device) is low, and the channel estimation performance is a bottleneck. A gain obtained by using wideband channel estimation outweighs a loss of a smaller precoding granularity, to increase the signal to interference plus noise ratio of the PUSCH received by the network device.

FIG. 8 is a diagram of a structure of an apparatus for physical uplink shared channel transmission according to an embodiment of this application. The apparatus may be a terminal device, or may be a module (for example, a chip) in the terminal device. As shown in FIG. 8, the apparatus 800 includes at least a receiving unit 801 and a determining unit 802.

The receiving unit 801 is configured to receive a modulation and coding scheme MCS of a physical uplink shared channel PUSCH.

The determining unit 802 is configured to determine a precoding frequency domain granularity of the PUSCH based on the MCS.

In a possible implementation, the determining unit 802 is specifically configured to:
when the MCS is less than a first MCS threshold, determine that the precoding frequency domain granularity is a scheduled bandwidth of the PUSCH, where the scheduled bandwidth is a frequency domain resource assigned by a network device to the terminal device; or
when the MCS is not less than the first MCS threshold, determine that the precoding frequency domain granularity is less than the scheduled bandwidth.

In a possible implementation, M intervals are obtained by dividing N second MCS thresholds, where N is an integer greater than 1, and M is not greater than N; each of the M intervals corresponds to one preset granularity; the M intervals include a first interval, and the determining unit 802 is specifically configured to:
when the MCS belongs to the first interval, determine a preset granularity corresponding to the first interval as the precoding frequency domain granularity.

In a possible implementation, the determining unit 802 is specifically configured to:
determine the precoding frequency domain granularity of the PUSCH based on first indication information and the MCS, where the first indication information is frequency domain resource assignment.

In a possible implementation, the determining unit 802 is specifically configured to:
when the MCS is less than a third MCS threshold and resource blocks of the PUSCH are contiguous in frequency domain, determine that the precoding frequency domain granularity is the scheduled bandwidth.

In a possible implementation, the determining unit 802 is specifically configured to:
when the MCS is less than the third MCS threshold and the resource blocks of the PUSCH are non-contiguous in frequency domain, determine that the precoding frequency domain granularity is less than the scheduled bandwidth.

In a possible implementation, the apparatus further includes a precoding unit 803, and the precoding unit 803 is configured to:
when the MCS is less than the third MCS threshold and the resource blocks of the PUSCH are non-contiguous in frequency domain, use a same precoding matrix for resource blocks in the scheduled bandwidth that belong to a same frequency domain interval, where the frequency domain interval includes several contiguous resource blocks.

In a possible implementation, the apparatus further includes the precoding unit 803, and the precoding unit 803 is configured to:
when the MCS is less than the third MCS threshold and the resource blocks of the PUSCH are non-contiguous in frequency domain, use a same precoding matrix for contiguous resource blocks in the scheduled bandwidth.

In a possible implementation, the apparatus further includes the precoding unit 803, and the precoding unit 803 is configured to:
when the MCS is less than the third MCS threshold and the resource blocks of the PUSCH are non-contiguous in frequency domain, use a same precoding matrix for resource blocks meeting a first condition, where the resource blocks meeting the first condition include at least one first resource block and at least one second resource block, and a quantity of unscheduled resource blocks between the at least one first resource block and the at least one second resource block is less than a first frequency domain resource threshold.

In a possible implementation, the apparatus further includes the precoding unit 803, and the precoding unit 803 is configured to:
when the MCS is less than the third MCS threshold and the resource blocks of the PUSCH are non-contiguous in frequency domain, use different precoding matrices for resource blocks meeting a second condition, where the resource blocks meeting the second condition include at least one third resource block and at least one fourth resource block, and a quantity of unscheduled resource blocks between the at least one third resource block and the at least one fourth resource block is not less than the first frequency domain resource threshold.

In a possible implementation, the determining unit 802 is specifically configured to:
when the MCS is not less than the third MCS threshold, determine that the precoding frequency domain granularity is less than the scheduled bandwidth.

In a possible implementation, the apparatus further includes the precoding unit 803, and the precoding unit 803 is configured to:
when the MCS is not less than the third MCS threshold, use a same precoding matrix for resource blocks in the scheduled bandwidth that belong to a same frequency domain interval; and use different precoding matrices for resource blocks in the scheduled bandwidth that do not belong to a same frequency domain interval, where the frequency domain interval includes several contiguous resource blocks.

For more detailed descriptions of the receiving unit 801 and the determining unit 802, directly refer to related descriptions of the terminal device in the method embodiment shown in FIG. 2. Details are not described herein again.

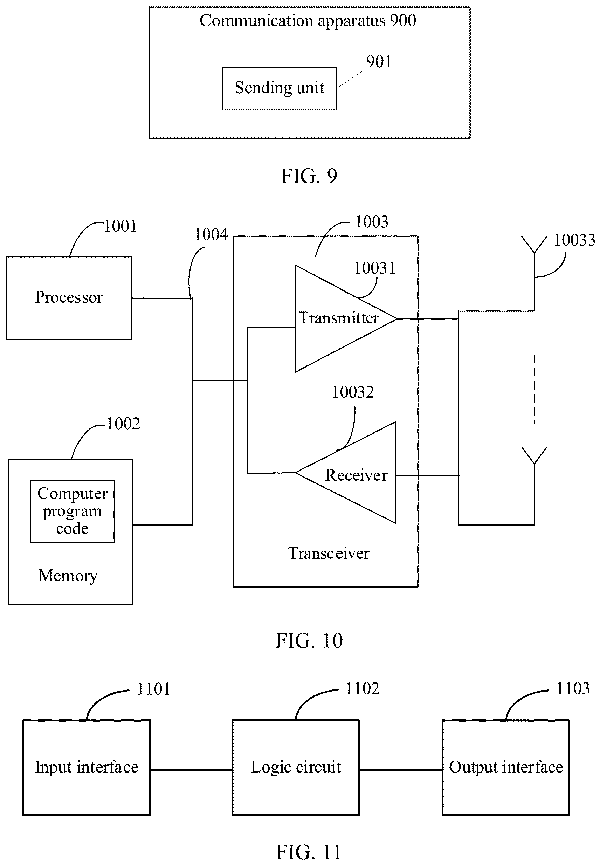

FIG. 9 is a diagram of a structure of another apparatus for physical uplink shared channel transmission according to an embodiment of this application. The apparatus may be a network device, or may be a module (for example, a chip) in the network device. As shown in FIG. 9, the apparatus 900 includes at least a sending unit 901.

The sending unit 901 is configured to send a modulation and coding scheme MCS of a physical uplink shared channel PUSCH, where the MCS is used to determine a precoding frequency domain granularity of the PUSCH.

In a possible implementation, when the MCS is less than a first MCS threshold, the precoding frequency domain granularity is a scheduled bandwidth of the PUSCH, where the scheduled bandwidth is a frequency domain resource assigned by the network device to a terminal device, and the terminal device is a device that receives the MCS; or
when the MCS is not less than the first MCS threshold, the precoding frequency domain granularity is less than the scheduled bandwidth.

In a possible implementation, M intervals are obtained by dividing N second MCS thresholds, where N is an integer greater than 1, and M is not greater than N; each of the M intervals corresponds to one preset granularity; and
when the MCS belongs to a first interval, the precoding frequency domain granularity is a preset granularity corresponding to the first interval.

In a possible implementation, the sending unit 901 is further configured to:
send first indication information, where the first indication information is used to determine the precoding frequency domain granularity of the PUSCH, and the first indication information is frequency domain resource assignment.

In a possible implementation, when the MCS is less than a third MCS threshold and resource blocks of the PUSCH are contiguous in frequency domain, the scheduled bandwidth is the precoding frequency domain granularity.

In a possible implementation, when the MCS is less than the third MCS threshold and the resource blocks of the PUSCH are non-contiguous in frequency domain, the precoding frequency domain granularity is less than the scheduled bandwidth.

In a possible implementation, when the MCS is less than the third MCS threshold and the resource blocks of the PUSCH are non-contiguous in frequency domain, resource blocks in the scheduled bandwidth that belong to a same frequency domain interval correspond to a same precoding matrix, where the frequency domain interval includes several contiguous resource blocks.

In a possible implementation, when the MCS is less than the third MCS threshold and the resource blocks of the PUSCH are non-contiguous in frequency domain, contiguous resource blocks in the scheduled bandwidth correspond to a same precoding matrix.

In a possible implementation, when the MCS is less than the third MCS threshold and the resource blocks of the PUSCH are non-contiguous in frequency domain, resource blocks meeting a first condition correspond to a same precoding matrix, where the resource blocks meeting the first condition include at least one first resource block and at least one second resource block, and a quantity of unscheduled resource blocks between the at least one first resource block and the at least one second resource block is less than a first frequency domain resource threshold.

In a possible implementation, when the MCS is less than the third MCS threshold and the resource blocks of the PUSCH are non-contiguous in frequency domain, resource blocks meeting a second condition correspond to different precoding matrices, where the resource blocks meeting the second condition include at least one third resource block and at least one fourth resource block, and a quantity of unscheduled resource blocks between the at least one third resource block and the at least one fourth resource block is not less than the first frequency domain resource threshold.

In a possible implementation, when the MCS is not less than the third MCS threshold, the precoding frequency domain granularity is less than the scheduled bandwidth.

In a possible implementation, when the MCS is not less than the third MCS threshold, the resource blocks that belong to the same frequency domain interval and that are in the scheduled bandwidth correspond to the same precoding matrix, and resource blocks in the scheduled bandwidth that do not belong to a same frequency domain interval correspond to different precoding matrices, where the frequency domain interval includes several contiguous resource blocks.

For more detailed descriptions of the sending unit 901, directly refer to the related descriptions of the network device in the method embodiment shown in FIG. 2. Details are not described herein again.

Based on the foregoing network architecture, FIG. 10 is a diagram of a structure of still another apparatus for physical uplink shared channel transmission according to an embodiment of this application. As shown in FIG. 10, the apparatus for physical uplink shared channel transmission may include a processor 1001, a memory 1002, a transceiver 1003, and a bus 1004. The memory 1002 may exist independently, and may be connected to the processor 1001 through the bus 1004. The memory 1002 may alternatively be integrated with the processor 1001. The bus 1004 is configured to implement connections between these components. In a case, as shown in FIG. 10, the transceiver 1003 may include a transmitter 10031, a receiver 10032, and an antenna 10033. In another case, the transceiver 1003 may include a transmitter machine (that is, an output interface) and a receiver machine (that is, an input interface). The transmitter machine may include a transmitter and an antenna, and the receiver machine may include a receiver and an antenna.

The apparatus for physical uplink shared channel transmission may be a terminal device, or may be a module in the terminal device. When computer program instructions stored in the memory 1002 are executed, the processor 1001 may be configured to perform the foregoing embodiments, and the transceiver 1003 may be configured to perform operations performed by the receiving unit 801 in the foregoing embodiment. The apparatus for physical uplink shared channel transmission may be further configured to perform various methods performed by the terminal device in the method embodiments in FIG. 2 to FIG. 7. Details are not described again.

The apparatus for physical uplink shared channel transmission may be a network device, or may be a module in the network device. When computer program instructions stored in the memory 1002 are executed, the processor 1001 may be configured to perform the foregoing embodiments, and the transceiver 1003 may be configured to perform operations performed by the sending unit 901 in the foregoing embodiment. The apparatus for physical uplink shared channel transmission may be further configured to perform various methods performed by the network device in the method embodiments in FIG. 2 to FIG. 7. Details are not described again.

Based on the foregoing network architecture, FIG. 11 is a diagram of a structure of yet another apparatus for physical uplink shared channel transmission according to an embodiment of this application. As shown in FIG. 11, the apparatus for physical uplink shared channel transmission may include an input interface 1101, a logic circuit 1102, and an output interface 1103. The input interface 1101 is connected to the output interface 1103 through the logic circuit 1102. The input interface 1101 is configured to receive information from another apparatus for physical uplink shared channel transmission, and the output interface 1103 is configured to output, schedule, or send information to the another apparatus for physical uplink shared channel transmission. The logic circuit 1102 is configured to perform an operation other than operations of the input interface 1101 and the output interface 1103, for example, implement a function implemented by the processor 1001 in the foregoing embodiment. The apparatus for physical uplink shared channel transmission may be a terminal device (or a module in the terminal device), or may be a network device (or a module in the network device). For more detailed descriptions of the input interface 1101, the logic circuit 1102, and the output interface 1103, directly refer to related descriptions of the terminal device and the network device in the foregoing method embodiments. Details are not described herein again.

An embodiment of this application further discloses a computer-readable storage medium, where the computer-readable storage medium stores instructions. When the instructions are executed, the method in the foregoing method embodiments is performed.

An embodiment of this application further discloses a computer program product including instructions, and when the instructions are executed, the method in the foregoing method embodiments is performed.

An embodiment of this application further discloses a communication system. The communication system may include a network device and a terminal device. For specific descriptions, refer to the precoding method for physical uplink shared channel transmission shown in FIG. 2 to FIG. 7.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A precoding method for physical uplink shared channel transmission, wherein the method comprises:
receiving a modulation and coding scheme MCS of a physical uplink shared channel PUSCH; and
determining a precoding frequency domain granularity of the PUSCH based on the MCS.

2. The method according to claim 1, wherein the determining the precoding frequency domain granularity of the PUSCH based on the MCS comprises:
when the MCS is less than a first MCS threshold, determining that the precoding frequency domain granularity is a scheduled bandwidth of the PUSCH, wherein the scheduled bandwidth is a frequency domain resource assigned by the network device to a terminal device; or
when the MCS is not less than the first MCS threshold, determining that the precoding frequency domain granularity is less than the scheduled bandwidth.

3. The method according to claim 1, wherein M intervals are obtained by dividing N second MCS thresholds, wherein N is an integer greater than 1, and M is not greater than N; each of the M intervals corresponds to one preset granularity; the M intervals comprise a first interval; and the determining the precoding frequency domain granularity of the PUSCH based on the MCS comprises:
when the MCS belongs to the first interval, determining a preset granularity corresponding to the first interval as the precoding frequency domain granularity.

4. The method according to claim 1, wherein the determining the precoding frequency domain granularity of the PUSCH based on the MCS comprises:
determining the precoding frequency domain granularity of the PUSCH based on first indication information and the MCS, wherein the first indication information is frequency domain resource assignment.

5. The method according to claim 4, wherein the determining the precoding frequency domain granularity of the PUSCH based on the first indication information and the MCS comprises:
when the MCS is less than a third MCS threshold and resource blocks of the PUSCH are contiguous in frequency domain, determining that the precoding frequency domain granularity is the scheduled bandwidth.

6. The method according to claim 4 or 5, wherein the determining the precoding frequency domain granularity of the PUSCH based on the first indication information and the MCS comprises:
when the MCS is less than the third MCS threshold and the resource blocks of the PUSCH are non-contiguous in frequency domain, determining that the precoding frequency domain granularity is less than the scheduled bandwidth.

7. The method according to any one of claims 4 to 6, wherein the method further comprises:
when the MCS is less than the third MCS threshold and the resource blocks of the PUSCH are non-contiguous in frequency domain, using a same precoding matrix for resource blocks in the scheduled bandwidth that belong to a same frequency domain interval, wherein the frequency domain interval comprises a plurality of contiguous resource blocks.

8. The method according to any one of claims 4 to 7, wherein the method further comprises:
when the MCS is less than the third MCS threshold and the resource blocks of the PUSCH are non-contiguous in frequency domain, using a same precoding matrix for contiguous resource blocks in the scheduled bandwidth.

9. The method according to any one of claims 4 to 6, wherein the method further comprises:
when the MCS is less than the third MCS threshold and the resource blocks of the PUSCH are non-contiguous in frequency domain, using a same precoding matrix for resource blocks meeting a first condition, wherein the resource blocks meeting the first condition comprise at least one first resource block and at least one second resource block, and a quantity of unscheduled resource blocks between the at least one first resource block and the at least one second resource block is less than a first frequency domain resource threshold.

10. The method according to claim 9, wherein the method further comprises:
when the MCS is less than the third MCS threshold and the resource blocks of the PUSCH are non-contiguous in frequency domain, using different precoding matrices for resource blocks meeting a second condition, wherein the resource blocks meeting the second condition comprise at least one third resource block and at least one fourth resource block, and a quantity of unscheduled resource blocks between the at least one third resource block and the at least one fourth resource block is not less than the first frequency domain resource threshold.

11. The method according to any one of claims 4 to 10, wherein the determining the precoding frequency domain granularity of the PUSCH based on the first indication information and the MCS comprises:
when the MCS is not less than the third MCS threshold, determining that the precoding frequency domain granularity is less than the scheduled bandwidth.

12. The method according to claim 11, wherein the method further comprises:
when the MCS is not less than the third MCS threshold, using a same precoding matrix for resource blocks in the scheduled bandwidth that belong to a same frequency domain interval; and using different precoding matrices for resource blocks in the scheduled bandwidth that do not belong to a same frequency domain interval, wherein the frequency domain interval comprises a plurality of contiguous resource blocks.

13. A precoding method for physical uplink shared channel transmission, applied to a network device, wherein the method comprises:
sending a modulation and coding scheme MCS of a physical uplink shared channel PUSCH, wherein the MCS is used to determine a precoding frequency domain granularity of the PUSCH.

14. The method according to claim 13, wherein when the MCS is less than a first MCS threshold, the precoding frequency domain granularity is a scheduled bandwidth of the PUSCH, wherein the scheduled bandwidth is a frequency domain resource assigned by the network device to a terminal device, and the terminal device is a device that receives the MCS; or
when the MCS is not less than the first MCS threshold, the precoding frequency domain granularity is less than the scheduled bandwidth.

15. The method according to claim 13, wherein M intervals are obtained by dividing N second MCS thresholds, wherein N is an integer greater than 1, and M is not greater than N; each of the M intervals corresponds to one preset granularity; and
when the MCS belongs to the first interval, the precoding frequency domain granularity is a preset granularity corresponding to the first interval.

16. The method according to claim 13, wherein the method further comprises:
sending first indication information, wherein the first indication information is used to determine the precoding frequency domain granularity of the PUSCH, and the first indication information is frequency domain resource assignment.

17. The method according to claim 16, wherein when the MCS is less than a third MCS threshold and resource blocks of the PUSCH are contiguous in frequency domain, the scheduled bandwidth is the precoding frequency domain granularity.

18. The method according to claim 16 or 17, wherein when the MCS is less than the third MCS threshold and the resource blocks of the PUSCH are non-contiguous in frequency domain, the precoding frequency domain granularity is less than the scheduled bandwidth.

19. The method according to any one of claims 16 to 18, wherein when the MCS is less than the third MCS threshold and the resource blocks of the PUSCH are non-contiguous in frequency domain, resource blocks in the scheduled bandwidth that belong to a same frequency domain interval correspond to a same precoding matrix, wherein the frequency domain interval comprises a plurality of contiguous resource blocks.

20. The method according to any one of claims 16 to 19, wherein when the MCS is less than the third MCS threshold and the resource blocks of the PUSCH are non-contiguous in frequency domain, contiguous resource blocks in the scheduled bandwidth correspond to a same precoding matrix.

21. The method according to any one of claims 16 to 18, wherein when the MCS is less than the third MCS threshold and the resource blocks of the PUSCH are non-contiguous in frequency domain, resource blocks meeting a first condition correspond to a same precoding matrix, wherein the resource blocks meeting the first condition comprise at least one first resource block and at least one second resource block, and a quantity of unscheduled resource blocks between the at least one first resource block and the at least one second resource block is less than a first frequency domain resource threshold.

22. The method according to claim 21, wherein when the MCS is less than the third MCS threshold and the resource blocks of the PUSCH are non-contiguous in frequency domain, resource blocks meeting a second condition correspond to different precoding matrices, wherein the resource blocks meeting the second condition comprise at least one third resource block and at least one fourth resource block, and a quantity of unscheduled resource blocks between the at least one third resource block and the at least one fourth resource block is not less than the first frequency domain resource threshold.

23. The method according to any one of claims 16 to 22, wherein when the MCS is not less than the third MCS threshold, the precoding frequency domain granularity is less than the scheduled bandwidth.

24. The method according to claim 23, wherein when the MCS is not less than the third MCS threshold, the resource blocks that belong to the same frequency domain interval and that are in the scheduled bandwidth correspond to the same precoding matrix, and resource blocks in the scheduled bandwidth that do not belong to a same frequency domain interval correspond to different precoding matrices, wherein the frequency domain interval comprises a plurality of contiguous resource blocks.

25. An apparatus for physical uplink shared channel transmission, comprising a module or a unit configured to perform the method according to any one of claims 1 to 24.

26. An apparatus for physical uplink shared channel transmission, comprising a processor and a memory, wherein the processor is coupled to the memory, and the processor invokes a computer program stored in the memory to implement the method according to any one of claims 1 to 24.

27. A computer-readable storage medium, wherein the computer-readable storage medium stores a computer program or computer instructions; and when the computer program or the computer instructions are run by a processor, the method according to any one of claims 1 to 24 is implemented.

28. A computer program product, wherein the computer program product comprises computer program code; and when the computer program code is run by a processor, the method according to any one of claims 1 to 24 is implemented.
